# EUROPEAN PATENT APPLICATION

(11) **EP 4 718 255 A1**
(43) Date of publication of application: **01.04.2026**
(21) Application number: 25202953.3
(22) Date of filing: 18.09.2025
(51) Int. Cl.: G06F 9/54, H04L 12/40

(54) **METHOD FOR PROCESSING AN EVENT MESSAGE IN AN IN-VEHICLE NETWORK, AND IN-VEHICLE CAN BUS NETWORK**

(30) Priority: 27.09.2024 CN 202411367911; 03.12.2024 WO PCT/CN2024/136340
(71) Applicant: Eve Energy Co., Ltd., Huizhou, Guangdong 516006 (CN)
(72) Inventor: ZHAN, Zuyan, 516006 Huizhou (CN); XIN, Longwei, 516006 Huizhou (CN); LI, Mao, 516006 Huizhou (CN); SUN, Mou, 516006 Huizhou (CN)
(74) Representative: Studio Torta S.p.A.

(57) **Abstract**

A method for processing an event message in an in-vehicle network is provided. The method includes: acquiring (101) a plurality of event message signals associated with the event message, each event message signal carried in a separate frame; determining (102) whether the event message is valid based on an accumulation rate of the number of valid signals within the plurality of event message signals; and executing (103) logic corresponding to the event message in response to determining that the event message is valid.

## Description

### Technical Field

The present invention relates to the field of control technology, and in particular, to a method for processing an event message in an in-vehicle network, and an in-vehicle controller area network (CAN) bus network.

### Background

Currently, a level of intelligence in new energy vehicles is increasing, and the intelligence is achieved through electronic control units (ECUs). Modem new energy vehicles are equipped with at least dozens of electronic control units, and a degree of coordination between the electronic control units determines an intelligence level of the vehicle.

### Summary

At present, communication between electronic control units in a vehicle is primarily conducted via CAN buses. For example, the electronic control units can exchange messages over the CAN buses. When receiving an event message, an electronic control unit directly executes logic corresponding to the event message. However, in some cases, the event message may be invalid or unintended for execution, and executing such messages can pose significant safety risks.

The present invention is defined by the independent claims as appended. Developments are set forth in the dependent claims.

In some implementations, the present invention provides a method for processing an event message in an in-vehicle network. The method includes the following operations.

A plurality of event message signals associated with the event message are acquired, each event message signal carried in a separate frame.

Whether the event message is valid is determined based on an accumulation rate of the number of valid signals within the plurality of event message signals.

Logic corresponding to the event message is executed in response to determining that the event message is valid.

In some implementations, the present invention provides an apparatus for processing an event message in an in-vehicle network. The apparatus is arranged in an electronic control unit and includes an acquisition module, a determination module, and an execution module.

The acquisition module is configured to acquire a plurality of event message signals associated with the event message.

The determination module is configured to determine whether the event message is valid based on an accumulation rate of the number of valid signals within the plurality of event message signals.

The execution module is configured to execute logic corresponding to the event message in response to determining that the event message is valid.

The benefit effects of the present invention are as follows: In the method for processing the event message in the in-vehicle network, when the plurality of event message signals associated with the event message are acquired, validity of the event message can be determined based on the accumulation rate of the number of valid signals within the plurality of event message signals. By considering the accumulation rate of the number of valid signals, more accurate and reliable determination results of the validity of the event message can be achieved. When the event message is determined to be valid, the logic corresponding to the event message is executed; when the event message is determined to be invalid, the logic corresponding to the event message is not executed. In this way, the electronic control unit is ensured to not execute invalid event messages, avoiding erroneous logic determinations, and preventing unintended actions, thereby significantly improving robustness of operation of the electronic control unit and enhancing safety and reliability of a vehicle intelligent system.

### Brief Description of the Drawings

FIG. 1 is a flowchart of a method for processing an event message in an in-vehicle network according to an embodiment of the present application.
FIG. 2 is a flowchart of a method for processing an event message in an in-vehicle network according to an embodiment of the present application.
FIG. 3 is a block diagram of an apparatus for processing an event message in an in-vehicle network according to an embodiment of the present application.
FIG. 4 is a block diagram of an in-vehicle CAN bus network according to an embodiment of the present application.

### Detailed Description

Currently, a level of intelligence in new energy vehicles is increasing, and the intelligence is achieved through electronic control units (ECUs). Modem new energy vehicles are equipped with at least dozens of electronic control units, and a degree of coordination between the electronic control units determines an intelligence level of the vehicle.

Due to a large number of electronic control units in a vehicle, not every electronic control unit directly communicates with all other electronic control units in the vehicle. Each electronic control unit only requires and obtains a limited set of information from other electronic control units. However, each electronic control unit broadcasts own status to a CAN bus. If all electronic control units are connected to a single CAN bus, a bus load rate can become excessively high, leading to potential message loss. One solution is to configure a plurality of CAN buses, distributing the electronic control units across different CAN buses, with gateways facilitating communication among the plurality of CAN buses. In this way, when electronic control units on different CAN buses need to exchange information, the gateway can forward related signals to corresponding electronic control units.

Currently, when receiving an event message, an electronic control unit directly executes logic corresponding to the event message. However, in some cases, the acquired event message may be invalid or should not be executed. For example, the message might be erroneously sent by other electronic control units, or external interference might cause the electronic control unit to misinterpret noise as a valid event message. This defect, which may cause execution of invalid messages, poses a serious risk to safety and reliability of intelligent system of the vehicle.

The present application provides a method for processing an event message in an in-vehicle network, which improves accuracy of validity determination of event messages.

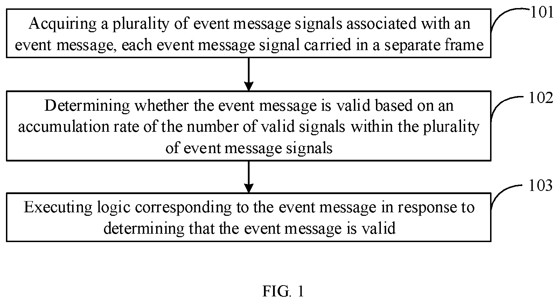

Referring to FIG. 1, which is a flowchart of a method for processing an event message in an in-vehicle network according to an embodiment of the present application. In an embodiment, the method may be applied to an electronic control unit, meaning operations included in the method may be executed by the electronic control unit. In another embodiment, the method may also be cooperatively executed by the aforementioned gateway and the electronic control unit. For example, the gateway may determine whether the event message is valid. When determining the event message is valid, the gateway forwards the event message to a corresponding electronic control unit, which then executes logic corresponding the event message. When determining the event message is invalid, the gateway does not forward the event message to the corresponding electronic control unit.

The following description primarily focuses on the electronic control unit as an executing subject. The method for processing the event message in an in-vehicle network provided in the present application includes at least the following operations 101-103.

In the operation 101, a plurality of event message signals associated with the event message are acquired, each event message signal carried in a separate frame.

Messages can be of various types, such as periodic messages or event messages. Periodic messages are messages sent at fixed time intervals and can effectively facilitate data exchange between electronic control units, ensuring synchronization of data among the electronic control units. Event messages are messages sent only when specific events occur. For example, an electronic control unit of an engine may send a message when an engine speed changes, allowing other electronic control units to receive a current status of the engine. Additionally, event messages may be used to transmit critical control information, such as control signals related to a safety system of the vehicle.

A CAN message consists of a plurality of parts, including at least a frame identifier (ID) and data. In an embodiment, when receiving the CAN message, the electronic control unit may parse the CAN message to determine whether the CAN message is an event message.

An event message may be represented by a plurality of event message signals. The plurality refers to two or more. When a specific event occurs, an electronic control unit detecting the event may send the plurality of event message signals to other relevant electronic control units. The plurality of event message signals sent by the electronic control unit may be identical or partially different. For example, the plurality of event message signals sent by the electronic control unit may share a same frame ID but have different data, or may have different frame IDs but identical data. When determining validity of the event message, the other relevant electronic control units may base the determination on the plurality of event message signals which are acquired by the other electronic control units, thereby improving accuracy of validity determination of the event message.

In the operation 102, whether the event message is valid is determined based on an accumulation rate of the number of valid signals within the plurality of event message signals.

The plurality of event message signals may include both valid and invalid signals. The number of the valid signals can be accumulated and counted. When determining the validity of the event message, the accumulation rate of the valid signals is considered in the application, thereby ensuring the accuracy and reliability of the determination.

It should be understood that when the electronic control unit receives the plurality of event message signals, even if the number of the valid signals can be accumulated, the event message may still be deemed invalid if the accumulation rate is slow. This is because, a valid event message should exhibit a stable and fast accumulation rate of the corresponding valid signals.

Based on the accumulation rate of the valid signals within the plurality of event message signals, the validity of the event message can be determined. When a determination result indicates that the event message is valid, the operation 103 is executed. When the event message is deemed invalid, logic corresponding to the event message is not executed.

In the operation 103, in response to determining that the event message is valid, logic corresponding to the event message is executed.

For an event message determined as valid, the electronic control unit may execute the logic corresponding to the event message. In an embodiment, executing the logic corresponding to the event message may involve the event message containing the logic (where the logic may include one or more executable actions), and the electronic control unit executes the logic specified in the event message. In an embodiment, the electronic control unit may store processing logics for different events. Executing the logic corresponding to the event message may involve identifying an event indicated by the event message, determining the logic corresponding to the event based on stored event-logic mapping, and then executing the logic.

For an event message determined as invalid, the electronic control unit does not execute the corresponding logic. In other words, the electronic control unit takes no action in response to the invalid event message.

In the method for processing the event message in the in-vehicle network provided in the present application, when the plurality of event message signals associated with the event message are acquired, the validity of the event message is determined based on the accumulation rate of the number of valid signals within the plurality of event message signals. By considering the accumulation rate of the number of the valid signals, more accurate and reliable determination result of event message validity can be achieved. When the event message is deemed valid, the logic corresponding to the event message is executed; when the event message is deemed invalid, the logic corresponding to the event message is not executed. In this way, the electronic control unit is ensured to not execute invalid event messages, avoiding erroneous logic determinations, and preventing unintended actions, thereby significantly improving robustness of operation of the electronic control unit and enhancing safety and reliability of a vehicle intelligent system.

Understandably, there are a plurality of ways to measure the accumulation rate of the number of the valid signals. In an embodiment, the accumulation rate of the number of the valid signals can be determined by whether the number of valid signals can reach a preset threshold in a preset duration. That is, when the number of the valid signals can accumulate to the preset threshold in the preset duration, the accumulation rate can be considered fast, and the event message is deemed valid. Conversely, when the number of valid signals fails to reach the threshold in the preset duration, the accumulation rate is considered slow, and the event message is deemed invalid. In other embodiments, the accumulation rate of the number of the valid signals may also be assessed based on an increment of the valid signals in the preset duration. For example, when the number of the valid signals increases by 5 in 1 second, the accumulation rate is considered fast, confirming the event message as valid. However, when only 2 valid signals are added in 1 second, the accumulation rate is deemed slow, and the event message is determined to be invalid.

In an embodiment, the electronic control unit receives the event message signals frame by frame. Upon receiving a first event message signal, both counting of valid signals and timing are initiated. The counting process accumulates the number of valid signals, while the timing tracks an accumulated duration.

For the valid signals, that is, the electronic control unit can perform validity determination on a current event message signal, and when the determination result is valid, the current event message signal is confirmed as a valid signal; and when the determination result is invalid, the current event message signal is confirmed as an invalid signal. When the current event message signal is determined to be the valid signal, the electronic control unit increments a count value of the valid signals by one. As the electronic control unit continuously performs validity detection on acquired event message signals, the count value of the valid signals progressively increases. When the count value of the valid signals is greater than or equal to the preset threshold, and the accumulated duration remains less than or equal to the preset duration, the event message is determined to be valid. In other words, after the timing is initiated, two parallel determinations can be performed simultaneously: The first determines whether the count value of the valid signals is greater than or equal to the preset threshold, while the second checks whether the accumulated duration has currently reached the preset duration. The event message is confirmed as valid only when the count value of the valid signals is greater than or equal to the preset threshold while the accumulated duration is less than the preset duration. Conversely, when the accumulated duration reaches the preset duration while the count value of the valid signals remains less than or equal to the preset threshold, the event message is determined to be invalid. By incorporating both counting and timing as two dimensions for evaluating the validity of the event message, the reliability of event message validity determination can be significantly enhanced.

In the aforementioned embodiments, the validity of each acquired event message signal can be determined, and a plurality of approaches are available for the determining. In an embodiment, when acquiring a current event message signal, the system may compare the current event message signal with a past event message signal. When a comparison result indicates that the current event message signal is consistent with the past event message signal, the current event message signal is deemed the valid signal; conversely, when a comparison result indicates that the current event message signal is inconsistent with the past event message signal, the current event message signal is deemed the invalid signal. The past event message signal refers to an event message signal acquired prior to the current event message signal.

As previously mentioned, one frame of event message signal may include a plurality of sections, such as a frame ID section and a data section. When comparing the current event message signal with the past event message signal, one embodiment may involve comparing a frame ID of the current event message signal with a frame ID of the past event message signal. When the frame ID of the current event message signal is the same as the frame ID of the past event message signal, the current event message signal is the valid signal; otherwise, the current event message signal is the invalid signal. Alternatively, another embodiment may involve comparing a data section of the current event message signal with a data section of the past event message signal. When the data section of the current event message signal is the same as the data section of the past event message signal, the current event message signal is the valid signal; otherwise, the current event message signal is the invalid signal. **In** yet another approach, a comprehensive comparison of all sections between the current fame and the past frame can be performed. Only each section of the current event message signal is the same as a respective section of the past event message signal, the current event message signal is the valid signal; otherwise, the current event message signal is the invalid signal.

It should be noted that event message signals are received frame-by-frame. In an embodiment, when the comparison of the current event message signal with the past event message signal shows inconsistency, i.e., the current event message signal is the invalid signal, the count value of the valid signals and the accumulated duration can be simultaneously cleared. When the current event message signal is determined to be the invalid signal, it indicates an interruption in valid signal continuity at the current frame, demonstrating insufficient valid signal persistence. To ensure accurate validity determination of the event messages, in this embodiment, all valid signals prior to the current event message signal are discarded by clearing both the count value of the of the valid signals and the accumulated duration, thereby determining the event message is invalid. As noted earlier, when the accumulated duration reaches the preset duration (i.e., the accumulated duration is greater than or equal to the preset duration) while the count value of the valid signals remains less than or equal to the preset threshold, the event message is determined to be invalid, with simultaneous resetting of both the count value of the valid signals and the accumulated duration.

When determining whether the current event message signal is the valid signal, the current event message signal may be compared with the past event message signal. In an embodiment, the past frame may be a first event message signal acquired, meaning the current event message signal can be compared with the first event message signal to determine the validity of the current event message signal. In an embodiment, the past frame may be a frame immediately preceding the current event message signal, and the current event message signal can be compared with the immediately preceding frame of the current event message signal to determine the validity of the current event message signal.

Invalid event messages may result from two scenarios: First, erroneous transmission by other electronic control units; second, external interference causing the electronic control unit to mistakenly recognize an event message as having been received, where potential interference sources include other electronic devices, electromagnetic noise, and wireless communication networks. In an embodiment, the cause of generation of an invalid event message may be identified based on the reason why the event message is determined to be invalid. For the first scenario, since erroneous transmissions from other electronic control units typically persist for a relatively small number of frames and cease quickly, when an event message is invalid due to the count value of the valid signals being less than the preset threshold within the preset duration, in other words, when the accumulated duration is greater than or equal to the preset duration and the count value of the valid signals is less than the preset threshold, it can be determined that the event message is an erroneously transmitted message from other electronic control units. For the second scenario, since interference usually possesses randomness and uncertainty, signals caused by interference are difficult to remain consistent between consecutive frames. Therefore, when an event message is invalid due to the comparison result indicating that the current event message signal is inconsistent with the past event message signal, then it can be determined that the event message is an invalid message generated by interference.

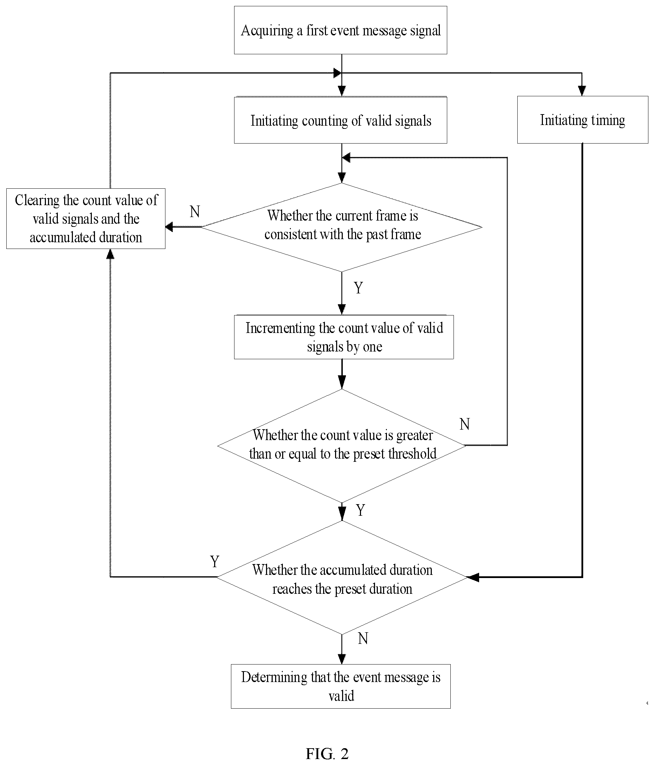

Please refer to FIG. 2, which is a flowchart of a method for processing an event message in an in-vehicle network according to an embodiment of the present application. In this embodiment, the counting of valid signals and timing are initiated immediately upon acquiring the first event message signal. The validity of each event message signal is determined by comparing each event message signal with the past event message signal. The event message is confirmed as valid only when the count value of the valid signals is greater than or equal to a preset threshold before the accumulated duration reaches a preset time limit. In this embodiment, the validity of event messages is comprehensively determined from three aspects: A transmission quantity of event messages (event message signals), a transmission timing of event messages (event message signals), and content of event messages (event message signals). In this way, risk of misidentification of event messages can be reduced, possibility of the electronic control units making incorrect logic judgments due to signal misidentification can be decreased, and operational robustness of the electronic control units can be enhanced.

In the method for processing the event message in the in-vehicle network provided in the present application, the validity of the event message is determined based on the accumulation rate of the number of valid signals within the plurality of event message signals when the plurality of event message signals associated with the event message are acquired. By considering the accumulation rate of the number of the valid signals within the plurality of event message signals, more accurate and reliable determination result of event message validity can be achieved. When the event message is deemed valid, the logic corresponding to the event message is executed; when the event message is deemed invalid, the logic corresponding to the event message is not executed. In this way, the electronic control unit is ensured to not execute invalid event messages, avoiding erroneous logic determinations, and preventing unintended actions, thereby significantly improving robustness of operation of the electronic control unit and enhancing safety and reliability of the vehicle intelligent system.

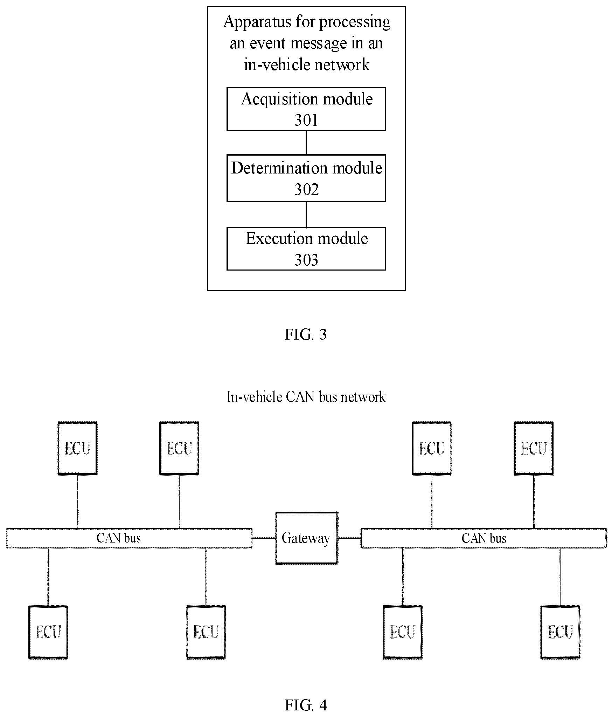

The present application further provides an apparatus for processing an event message in an in-vehicle network, which may be disposed in an electronic control unit. Please refer to FIG. 3, which is a block diagram of an apparatus for processing an event message in an in-vehicle network according to an embodiment of the present application. The apparatus includes an acquisition module 301, a determination module 302, and an execution module 303.

The acquisition module 301 is configured to acquire a plurality of event message signals associated with the event message, each event message signal carried in a separate frame.

The determination module 302 is configured to determine whether the event message is valid based on an accumulation rate of the number of valid signals within the plurality of event message signals.

The execution module 303 is configured to execute logic corresponding to the event message in response to determining that the event message is valid.

In an embodiment, the determination module 302 is further configured to determine that the event message is valid in response to the number of valid signals reaching a preset threshold in a preset duration.

In an embodiment, the determination module 302 is further configured to initiate counting of valid signals within the plurality of event message signals and timing in response to acquiring a first event message signal of the plurality of event message signals; increment a count value of valid signals by one in response to acquiring an event message signal determined to be a valid signal; and determine that the event message is valid in response to the count value of valid signals being greater than or equal to the preset threshold and an accumulated duration since the timing started being less than or equal to the preset duration.

In an embodiment, the determination module 302 is further configured to, in response to acquiring a current event message signal, compare the current event message signal with a past event message signal; and determine that the current event message signal is a valid signal in response to a comparison result indicating that the current event message signal is consistent with the past event message signal. The past event message signal is an event message signal prior to the current event message signal.

In an embodiment, the determination module 302 is further configured to clear the count value of valid signals and the accumulated duration in response to a comparison result indicating that the current event message signal is inconsistent with the past event message signal.

In an embodiment, the past event message signal is the first event message signal.

In an embodiment, the determination module 302 is further configured to determine that the event message is an invalid message generated by interference in response to the comparison result indicating that the current event message signal is inconsistent with the past event message signal.

In an embodiment, the determination module 302 is further configured to determine that the event message is a message mistakenly transmitted by a different electronic control unit in response to the count value of valid signals being less than the preset threshold and the accumulated duration being greater than or equal to the preset duration.

In an embodiment, the determination module 302 is further configured to clear the count value of the valid signals and the accumulated duration in response to the count value of valid signals being less than or equal to the preset threshold and the accumulated duration being greater than or equal to the preset duration.

Through the apparatus for processing the event message in the in-vehicle network provided by the present application, when the electronic control unit acquires the plurality of event message signals associated with the event message, whether the event message is valid can be determined based on the accumulation rate of the number of the valid signals within the plurality of event message signals. By considering the accumulation rate of the number of the valid signals within the plurality of event message signals, more accurate and reliable determination result of the validity of the event message can be achieved. When the event message is deemed valid, the logic corresponding to the event message is executed; and when the event message is deemed invalid, the logic corresponding to the event message is not executed. **In** this way, the electronic control unit is ensured to not execute invalid event messages, avoiding erroneous logic determinations, and preventing unintended actions, thereby significantly improving robustness of operation of the electronic control unit and enhancing safety and reliability of the vehicle intelligent system.

The present application further provides an in-vehicle CAN bus network. The in-vehicle CAN bus network includes a plurality of electronic control units (ECUs) communicated with each other. As described above, the ECUs may be mounted on a same bus for communication, or may be mounted on different buses with information forwarded among the different buses via gateways. Please refer to FIG. 4, which is a block diagram of an in-vehicle CAN bus network according to an embodiment of the present application.

Any ECU among the ECUs may include a memory and a processor. The memory may store one or more computer programs, and the processor may execute the one or more computer programs stored in the memory to perform the method for processing the event message in the in-vehicle network provided by the present application.

Through the in-vehicle CAN bus network provided by the present application, when the electronic control unit acquires the plurality of event message signals associated with the event message, whether the event message is valid can be determined based on the accumulation rate of the number of the valid signals within the plurality of event message signals. By considering the accumulation rate of the number of the valid signals within the plurality of event message signals, more accurate and reliable determination result of the validity of the event message can be achieved. When the event message is deemed valid, the logic corresponding to the event message is executed; when the event message is deemed invalid, the logic corresponding to the event message is not executed. In this way, the electronic control unit is ensured to not execute invalid event messages, avoiding erroneous logic determinations, and preventing unintended actions, thereby significantly improving robustness of operation of the electronic control unit and enhancing safety and reliability of the vehicle intelligent system.

The present application further provides an in-vehicle CAN bus network, which includes a plurality of ECUs, a plurality of CAN buses, and a gateway, the plurality of ECUs communicated with each other via the plurality of CAN buses, and the plurality of CAN buses communicated with each other via the gateway.

The gateway and the plurality of ECUs are configured to store one or more computer programs which, when executed by at least one processor of the gateway and the plurality of ECUs, cause the gateway and the plurality of ECUs to perform the method for processing the event message in the in-vehicle network.

## Claims

1. A method for processing an event message in an in-vehicle network, comprising:
acquiring (101) a plurality of event message signals associated with the event message, each event message signal carried in a separate frame;
determining (102) whether the event message is valid based on an accumulation rate of the number of valid signals within the plurality of event message signals; and
executing (103) logic corresponding to the event message in response to determining that the event message is valid.

2. The method for processing the event message in the in-vehicle network according to claim 1, wherein the determining (102) of whether the event message is valid based on the accumulation rate of the number of valid signals within the plurality of event message signals comprises:
determining that the event message is valid in response to the number of valid signals reaching a preset threshold in a preset duration.

3. The method for processing the event message in the in-vehicle network according to claim 2, wherein the determining (102) of whether the event message is valid based on the accumulation rate of the number of valid signals within the plurality of event message signals comprises:
initiating counting of valid signals within the plurality of event message signals and timing in response to acquiring a first event message signal of the plurality of event message signals;
incrementing a count value of valid signals by one in response to acquiring an event message signal determined to be a valid signal; and
determining that the event message is valid in response to the count value of valid signals being greater than or equal to the preset threshold and an accumulated duration since the timing started being less than or equal to the preset duration.

4. The method for processing the event message in the in-vehicle network according to claim 3, wherein determining of whether the acquired event message signal is a valid signal comprises:
in response to acquiring a current event message signal in the plurality of event message signals, comparing the current event message signal with a past event message signal; and
determining that the current event message signal is a valid signal in response to a comparison result indicating that the current event message signal is consistent with the past event message signal, wherein the past event message signal is an event message signal prior to the current event message signal.

5. The method for processing the event message in the in-vehicle network according to claim 4, wherein when a frame identifier of the current event message signal is the same as a frame identifier of the past event message signal, the current event message signal is determined to be a valid signal.

6. The method for processing the event message in the in-vehicle network according to claim 4, wherein when a data section of the current event message signal is the same as a data section of the past event message signal, the current event message signal is determined to be a valid signal.

7. The method for processing the event message in the in-vehicle network according to claim 4, wherein the current event message signal and the past event message signal each comprise a plurality of sections; and
when each section of the current event message signal is the same as a respective section of the past event message signal, the current event message signal is determined to be a valid signal.

8. The method for processing the event message in the in-vehicle network according to any one of claims 4 to 7, further comprising:
clearing the count value of valid signals and the accumulated duration in response to a comparison result indicating that the current event message signal is inconsistent with the past event message signal.

9. The method for processing the event message in the in-vehicle network according to any one of claims 4 to 8, wherein the past event message signal is the first event message signal.

10. The method for processing the event message in the in-vehicle network according to any one of claims 4 to 9, further comprising:
determining that the event message is an invalid message generated by interference in response to the comparison result indicating that the current event message signal is inconsistent with the past event message signal.

11. The method for processing the event message in the in-vehicle network according to any one of claims 3 to 10, further comprising:
determining that the event message is a message mistakenly transmitted by a different electronic control unit in response to the count value of valid signals being less than the preset threshold and the accumulated duration being greater than or equal to the preset duration.

12. The method for processing the event message in the in-vehicle network according to any one of claims 3 to 11, further comprising:
clearing the count value of valid signals and the accumulated duration in response to the count value of valid signals being less than or equal to the preset threshold and the accumulated duration being greater than or equal to the preset duration.

13. An apparatus for processing an event message in an in-vehicle network, comprising:
an acquisition module (301), configured to acquire a plurality of event message signals associated with the event message, each event message signal carried in a separate frame;
a determination module (302), configured to determine whether the event message is valid based on an accumulation rate of the number of valid signals within the plurality of event message signals; and
an execution module (303), configured to execute logic corresponding to the event message in response to determining that the event message is valid.

14. An electronic control unit (ECU), comprising a memory and a processor, wherein the memory is configured to store one or more computer programs which, when executed by the processor, cause the processor to perform the method for processing the event message in the in-vehicle network according to any one of claims 1 to 12.

15. An in-vehicle controller area network (CAN) bus network, comprising a plurality of electronic control units (ECUs), a plurality of CAN buses, and a gateway, the plurality of ECUs communicated with each other via the plurality of CAN buses, and the plurality of CAN buses communicated with each other via the gateway;
wherein the gateway and the plurality of ECUs are configured to store one or more computer programs which, when executed by at least one processor of the gateway and the plurality of ECUs, cause the gateway and the plurality of ECUs to perform the method for processing the event message in the in-vehicle network according to any one of claims 1 to 12.
